# EUROPEAN PATENT SPECIFICATION

(11) **EP 0 578 179 B1**
(45) Date of publication and mention of the grant of the patent: **15.01.1997**
(21) Application number: 93110735.3
(22) Date of filing: 05.07.1993
(51) Int. Cl.: B29C 33/50, B29C 41/22, A45D 40/16

(54) **Method of manufacturing lipsticks and elastic mold**
Verfahren zum Herstellen von Lippenstiften und elastische Gussform
Procédé pour la fabrication de rouge à fèvres et moule flexibles

(30) Priority: 07.07.1992 JP 179858/92
(43) Date of publication of application: 12.01.1994
(73) Proprietor: ASAHI DENKA KOGYO KABUSHIKI KAISHA, Arakawa-ku Tokyo (JP); OKAMOTO INDUSTRIES, INC., Bunkyo-ku Tokyo 113 (JP)
(72) Inventor: Hayashi, Toshihiro c/o Asahi Denka Kogyo K.K., Arakawa-ku, Tokyo (JP); Kohno, Hiroshige c/o Asahi Denka Kogyo K.K., Arakawa-ku, Tokyo (JP); Watanabe, Akinori, Shibuya-ku, Tokyo (JP); Horiguchi, Itaru, Ryugasaki-shi, Ibaraki-ken (JP)
(74) Representative: Kraus, Walter, Dr.

(56) References cited:
- EP-A- 0 519 372
- FR-A- 2 443 324
- FR-A- 2 658 034
- US-A- 5 108 667

## Description

### BACKGROUND OF THE INVENTION

### Field of the Invention

The present invention relates to a method of manufacturing lipsticks having a surface with excellent gloss and to an elastic mold used for the manufacturing method.

### Description of the Prior Art

Materials for coloring the lips, generally called lipsticks, are classified into three groups; rod-shaped lipsticks, paste lipsticks, and liquid lipsticks, in which rod-shaped lipsticks are most popular owing to their easiness in use. The rod-shaped lipsticks are normally made of an oily base material and a coloring agent. The oily base material is produced by the combination of oil and fat, which include fats and fatty oils of vegetable or animal origin, and waxes. Specifically, rod-shaped lipsticks (hereinafter simply referred to as lipsticks) are normally prepared by a process comprising mixing waxes with oil and fat, heating the mixture for dissolution, adding a coloring agent and homogenizing to thoroughly disperse the coloring agent, degassing the base material-coloring agent blend, and charging the degassed blend to a metal mold for molding the lipsticks, cooling the lipsticks to solidify, and removing the solidified lipsticks from the mold. The molded sticks are then inserted into lipstick containers and processed by a flame treatment, in which the surface of the lipsticks are slightly melted by flame to make the surface smooth in order to give a good external appearance and gloss. In this manner, the conventional methods for the preparation of lipsticks requires the flame treatment as a finishing step. This necessitates lipsticks to be a simple rod shape and makes it difficult to make the lipsticks of an optional design or to provide a desired pattern on their surfaces. In addition, the preparation process is complicated.

A molding method using an elastic mold made of an elastomer, such as natural rubber, chloroprene rubber, or the like, is conventionally known in the art for molding various products. The elastic mold used in this molding method is a hollow article having an opening port. Fluid materials to be molded are introduced into the mold through this opening port, filled in the mold, and solidified by heating, cooling, or the like. The solidified material is then taken out of the elastic mold by expanding the mold by the application of a pressure difference or the like to peel off the molded article. The expanded molded article is thus discharged from the opening port. The elastic mold can be used many times repeatedly. This method ensures a low production cost for the molding. Since no consideration is needed to be given for the reverse taper or the dislocated gradient, it is possible to mold various articles of desired designs. In addition, because the external appearance is not impaired by the formation of mold marks as in the case where the materials are molded by the split mold, this method is suitable for molding articles of various shapes in a small lot. It is thus applied to the molding materials such as chocolate, cheese, jelly, and the like.

The application of this method of using an elastic mold to the molding of lipsticks, however, produces lipsticks only with insufficient gloss. The flame treatment is thus necessary to give gloss to the lipsticks.

EP-A-0 519 372 which is a document within the meaning of Article 54(3) EPC relates to an elastic molding die comprising an elastomer laminate film, having an innermost layer comprising an elastomer not containing fillers. This document moreover discloses a method for producing an elastic molding die having an innermost layer not containing fillers comprising dipping a master model in an elastomer solution not containing fillers, taking out the master model, heat drying the master model to form a gelled elastomer film on the surface of the master model, dipping the master model in a coagulant solution, taking out the master model, heat drying the master model to coat said coagulant on the surface of the gelled elastomer film, dipping the model again in an elastomer solution, taking out the model, gelation treating the model, and peeling the elastomer film from the master model.

The objects of the present invention is to provide a method of molding lipsticks having excellent gloss on the surface using an elastic mold and to provide the elastic mold used for the manufacturing method. Since the molded lipsticks have a sufficient gloss on the surface without the flame treatment, they can be molded into a desired shape with a desired pattern on their surface.

The present inventors have undertaken extensive investigations on the causes that the molded lipsticks prepared by conventional elastic molds have poor gloss on their surface, and found that such causes come from the reinforcing materials, such as carbon black, clay, and the like, conventionally blended into the elastic molds for the improvement of their mechanical characteristics and endurance. Specifically, this type of elastic molds have conventionally been manufactured from latexes made from an elastomer, such as natural rubber, chloroprene rubber, or the like, blended with carbon black, clay, or the like, as a reinforcing material in order to give excellent mechanical characteristics and endurance to the mold. The presence of carbon black, clay, or the like was found to make the rough surface and to impair production of excellent gloss of the molded articles. The present inventors have therefore undertaken extensive studies on the use of elastic molds made of elastomers containing no reinforcing material in their innermost layer, and completed the present invention.

### SUMMARY OF THE INVENTION

Accordingly, an object of the present invention is to provide a method of manufacturing lipsticks comprising, providing an elastic mold having an opening port and made of an elastomer containing no reinforcing material in its innermost layer, charging a lipstick molding material to said elastic mold from said opening port, cooling said lipstick molding material to solidify, and removing the solidified lipsticks from the mold.

In a preferred embodiment of the present invention, said said elastomer forming said innermost layer is an oil-resistant elastomer, such as acrylic rubber, urethane rubber, fluorine-containing rubber, or the like.

In another preferred embodiment of the present invention, said elastomer forming said innermost layer comprises an oil-repellent agent such as a silicone resin or fluorine-containing resin.

Another object of the present invention is to provide an elastic mold used in said method of manufacturing lipsticks, which has an opening port and made of layered outer and inner elastomers, wherein the outer layer elastomer contains a reinforcing material and the inner layer elastomer contains no reinforcing material.

The above and other objects, features and advantages of the invention will become more apparent from the following description when taken in conjunction with the accompanying drawings, in which:

### BRIEF DESCRIPTION OF THE DRAWINGS

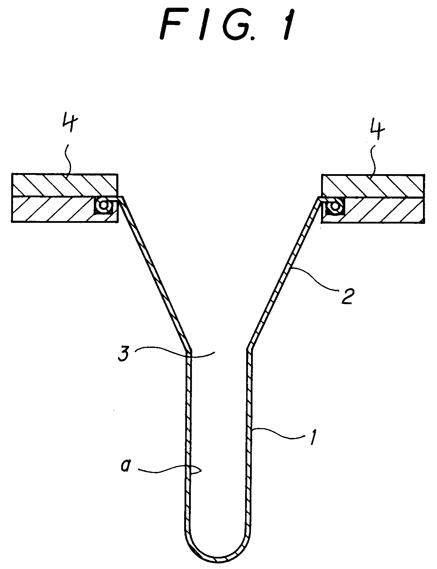

Figure 1 shows a cross-sectional view of one embodiment of the elastic mold used in the method of the present invention.

### DETAILED DESCRIPTION OF THE INVENTION AND PREFERRED EMBODIMENTS

The elastic mold used in the method of the present invention is a hollow article. A cross-sectional view of one of the examples of such elastic mold is given in Figure 1, in which is shown an elastic mold 1 for molding lipsticks having an inner wall a, an opening port 3, and a conical supporting portion 2, normally made of the same elastic material as the elastic mold 1, for supporting the elastic mold 1 suspended from supporting frames 4 and 4. According to the method of the present invention, lipsticks of any desired shapes can be molded by designing this elastic mold 1 in a desired shape. In addition, lipsticks having a pattern on the surface can be manufactured by providing the inner wall with a desired pattern.

The elastic mold of which the innermost layer is made of an elastomer containing no reinforcing material can be prepared by a method, for example, using a master mold made of glass or porcelain, designed in a desired shape and provided on its surface with a desired pattern. This master mold is immersed into an elastomer solution or suspension, such as a solution or suspension of natural rubber, chloroprene rubber, or the like, which contains no reinforcing material, such as carbon black, clay, or the like, drawn from the solution thus adhering the solution or suspension to the surface, coagulating the adhered elastomer, and releasing the elastomer from the master mold. The elastic mold thus prepared has a hollow space of a desired shape and a desired pattern may be provided on the inner wall thereof.

In the case where the elastic mold is made only of an elastomer which does not contain any reinforcing material, the mold may have poor mechanical characteristics or endurance. Because of this, it is desirable that the outer layer is formed by an elastomer to which a reinforcing material, such as carbon black, clay, or the like, is added, with the innermost layer being formed by an elastomer containing no reinforcing material. For example, the master pattern is first immersed into an elastomer solution or suspension not containing a reinforcing material and drawn out to adhere such a solution or suspension on its surface, followed by the coagulation of the elastomer, then, secondly, the master pattern is immersed into an elastomer solution or suspension containing a reinforcing material and drawn out to adhere such a solution or suspension on its surface, followed by the coagulation of the elastomer and release of the elastic mold from the master mold. Alternatively, an inner layer with a shape conforming to the internal surface of the outer layer is separately molded from an elastomer solution not containing a reinforcing material, and this inner layer is adhered to the internal surface of the elastic mold to form the innermost layer. A still other method is producing an outer layer from a latex to which a reinforcing material is added and applying an elastomer solution or suspension not containing a reinforcing material, such as carbon black or clay, to the internal surface of the outer layer to form a film of the elastomer. The application of the elastomer solution or suspension to the internal surface is carried out by spraying, brushing, immersion, or the like. The proportion of the inner layer and the outer layer is suitably determined taking the strength, elasticity, and the like required for the mold into consideration.

Although natural rubber and chloroprene rubber are excellent in their elasticity and ideal materials for use in elastic molds, natural rubber has a very low oil resistance and chloroprene rubber has also an insufficient oil resistance. Since lipsticks contain oil and fat and waxes as their major components, the elastic mold of which the innermost layer is formed by these rubber elastomers may gradually swell by the oil and fat and waxes while it is repeatedly used. The internal surface of the elastic mold becomes roughened with the progress of the swelling, resulting in decrease in the gloss of the molded lipstick surfaces. Therefore, the use of natural rubber or chloroprene rubber as a material for the innermost layer, even though it does not contain a reinforcing material therein, makes it difficult to manufacture glossy lipsticks for a long period of time. Therefore, it is preferable to use an oil-resistant elastomer, such as, for example, acrylic rubber, urethane rubber, fluorine-containing rubber, or the like, as the material for forming the innermost layer or to apply such an oil-resistant elastomer to the internal surface. Since these oil-resistant elastomers are not easily swelled by the oils, fats and the like contained in the lipstick materials, the elastic mold in which an oil-resistant elastomer is used for the innermost layer material ensures manufacture of glossy surface lipsticks for an extended period of time.

Furthermore, if an oil-repellent agent selected from the group consisting of silicone resins and fluorine-containing resins is added to the elastomer forming the innermost layer, more glossy molded articles can be manufactured for a long period of time. The incorporation of such an oil-repellent agent further suppresses the adhesiveness of the internal surface of the elastic mold and promotes the release characteristics of the molded lipsticks. Methylhydrogenpolysiloxane, dimethylpolysiloxane, dimethylmethylphenylpolysiloxane, and the like, as well as amino-modified, epoxy-modified, carboxy-modified, or alcohol-modified compounds of these resins, are given as examples of silicone resin. As a fluorine-containing resin, polytetrafluoroethylene, polychlorotrifluoroethylene, vinyl polyfluoride, and the like can be used. The amount to be incorporated of these resins is preferably 2 to 10 parts by weight for 100 parts by weight of the innermost layer elastomer.

Next, a method of manufacturing lipsticks using the elastic mold described above is illustrated.

A lipstick molding material is prepared by heating waxes together with oil and fat to dissolution, adding a coloring material to the mixture to disperse, and degassing the mixture. This lipstick molding material is charged into the elastic mold 1, which is supported by the supporting frames 4 and 4, through the opening port 3 as shown in Figure 1. The lipstick molding material is then cooled to solidify and discharged from the elastic mold 1. The discharge of the molded lipsticks can be carried out, for example, (i) by covering the whole elastic mold with a cup which is provided with a breather and discharging the air into the cup via the breather by suction to reduce the pressure therein, thus expanding the elastic mold; (ii) by covering the supporting member side of the elastic mold with a cup which is provided with a breather and introducing the air in the cup via the breather to increase the pressure in the cup, thus expanding the elastic mold; or (iii) expanding the whole elastic mold by the combination of the methods (i) and (ii). The molded articles are then released from the expanded elastic mold and discharged from the expanded opening port. The molding operation using this type of elastic mold can be carried out continuously by installing a number of supporting members aligned on a belt conveyer.

The lipsticks thus prepared have surfaces with excellent gloss and possess a sufficient commercial value, even if they are not subjected to the flame treatment. It is therefore possible to supply the lipsticks to the market in a shape as manufactured by the elastic mold, with a pattern developed on their surfaces if the pattern is provided on the internal wall of the elastic mold.

Other features of the invention will become apparent in the course of the following description of the exemplary embodiments which are given for illustration of the invention and are not intended to be limiting thereof.

### EXAMPLES

### Example 1

### (1) Preparation of an elastic mold

The following components were mixed for preparing the inner layer and the outer layer of the elastic mold.

### Inner layer components

| | parts by weight |
|---|---|
| Chloroprene rubber latex (as solid component) | 100 |
| Zinc oxide | 5 |
| Dithiocarbamate type vulcanization accelerator | 1 |
| Thiuram type vulcanization accelerator | 1 |
| Sulfur | 1 |
| Antioxidant | 1 |
| Stabilizer | q.s. |
| Glycine (20%) | q.s. |

### Outer layer components

| | parts by weight |
|---|---|
| Chloroprene rubber latex (as solid component) | 100 |
| Zinc oxide | 5 |
| Dithiocarbamate type vulcanization accelerator | 1 |
| Thiuram type vulcanization accelerator | 1 |
| Sulfur | 1 |
| Antioxidant | 1 |
| Stabilizer | q.s. |
| Carbon black | 30 |
| Glycine (20%) | q.s. |

An elastic mold having an inner layer and an outer layer was molded using latexes of the above compositions as follows. A master mold made of glass having a rod-shaped portion, which has a flower-like pattern on the internal surface and provided on the top of a conically shaped member, was immersed into a 20% calcium nitrate aqueous solution and dried. The master mold was then immersed into the latex for molding the inner layer and dried. Then, the master mold was again immersed into a 20% calcium nitrate aqueous solution and dried, followed by immersion into the latex for molding the outer layer and drying. The layered film of the elastomer thus formed was released from the master mold. After extracting the coagulating agent with 1% aqueous ammonia, the product was dried and vulcanized with heating, thus obtaining an elastic mold having a conically shaped supporting member and rod-shaped portion which has a flower-like pattern on the surface of internal wall.

### (2) Molding of lipsticks

The following oils and fats were heated to dissolution at a proportion shown below. Lake was added and thoroughly suspended, followed by the addition of perfume and other chemicals. After gently stirring, the mixture was degassed to prepare a lipstick material.

| | % by weight |
|---|---|
| Carnauba wax | 16.0 |
| Ozocerite | 16.0 |
| Lanolin | 24.0 |
| Liquid paraffin | 24.0 |
| Butyl stearate | 10.0 |
| Eosine | 3.0 |
| Lake | 5.0 |
| Perfume | 1.5 |
| Antioxidant | q.s. |

The lipstick material was charged to the elastic mold 1 through the opening port 3 supported by the supporting frames 4 and 4 in Figure 1. After charging, the material was cooled to solidify. A cup having a breather was set over the supporting frames, rotated for 180°, and the air was suctioned through the breather to reduce the pressure inside the cup, thus causing the molded article to expand and to be released from the elastic mold. The lipsticks thus prepared had a flower-like pattern on the surface and excellent gloss.

### Example 2

An outer layer of an elastic mold was formed using the same outer layer components as used in Example 1(1). A suspension having the following composition was coated on the surface of this outer layer, dried at 90°C, and heated to obtain an elastic mold.

### Innermost layer components

| | |
|---|---|
| Polyester-type polyurethane emulsion | 100 parts by weight |
| Water-soluble melamine-type cross-linking agent | 3 parts by weight |
| Methylhydrogenpolysiloxane | 6 parts by weight |

Lipstick were prepared using this elastic mold in the same manner as in Example 1(2) to obtain lipsticks with excellent gloss. This elastic mold exhibited a superior mold release characteristic and superb endurance.

The elastic mold of the present invention can manufacture lipsticks with a surface having excellent gloss . Therefore, the method of manufacturing lipsticks of the present invention can eliminate the flame treatment; i.e, the treatment of melting the surface of lipsticks to provide gloss, which is an essential finishing step in the conventional methods of manufacturing lipsticks. The elimination of such a treatment makes it possible to mold lipsticks in any desired shape and to provide a pattern of any desired design on the lipstick surfaces. In addition to the elimination of the flame treatment, the use of the elastic mold of the present invention ensures continuous manufacturing of lipsticks. It is adaptable to a small scale manufacturing of various types of products at a high productivity.

Obviously, numerous modifications and variations of the present invention are possible in light of the above teachings. It is therefore to be understood that within the scope of the appended claims, the invention may be practiced otherwise than as specifically described herein.

## Claims

1. A method of manufacturing lipsticks comprising, providing an elastic mold having an opening port and made of an elastomer containing no reinforcing material in its innermost layer, charging a lipstick molding material to said elastic mold from said opening port, cooling said lipstick molding material to solidify, and removing the solidified lipsticks from the mold.

2. The method of manufacturing lipsticks according to Claim 1, wherein said elastomer forming said innermost layer is an oil-resistant elastomer.

3. The method of manufacturing lipsticks according to Claim 2, wherein said oil-resistant elastomer is an elastomer selected from the group consisting of acrylic rubber, urethane rubber, and fluorine-containing rubber.

4. The method of manufacturing lipsticks according to Claim 1, wherein said elastomer forming said innermost layer comprises an oil-repellent agent selected from the group consisting of silicone resins and fluorine-containing resins.

5. An elastic mold used for manufacturing lipsticks having an opening port and made of layered outer and inner elastomers, wherein the outer layer elastomer contains a reinforcing material and the inner layer elastomer contains no reinforcing material.

6. The elastic mold for of manufacturing lipsticks according to Claim 5, wherein said elastomer forming said inner layer is an oil-resistant elastomer.

7. The elastic mold for manufacturing lipsticks according to Claim 6, wherein said oil-resistant elastomer is an elastomer selected from the group consisting of acrylic rubber, urethane rubber, and fluorine-containing rubber.

8. The method of manufacturing lipsticks according to Claim 5, wherein said elastomer forming said innermost layer comprises an oil-repellent agent selected from the group consisting of silicone resins and fluorine-containing resins.

## Patentansprüche

1. Verfahren zur Herstellung von Lippenstiften, wobei man eine elastische Form mit einem Öffnungsteil und aus einem Elastomeren, das kein Verstärkungsmaterial in seiner innersten Schicht enthält, bereitstellt, ein Lippenstiftformmaterial in die elastische Form durch den Öffnungsteil einbringt, das Lippenstiftformmaterial unter Verfestigung abkühlt und die verfestigten Lippenstifte aus der Form entnimmt.

2. Verfahren zur Herstellung von Lippenstiften nach Anspruch 1, wobei das Elastomere, das die innerste Schicht bildet, ein ölbeständiges Elastomeres ist.

3. Verfahren zur Herstellung von Lippenstiften nach Anspruch 2, wobei das ölbeständige Elastomere ein Elastomeres, ausgewählt aus der Gruppe, bestehend aus Acrylkautschuk, Urethankautschuk und fluorhaltigem Kautschuk, ist.

4. Verfahren zur Herstellung von Lippenstiften nach Anspruch 1, wobei das Elastomere, das die innerste Schicht bildet, ein ölabweisendes Mittel, ausgewählt aus der Gruppe, bestehend aus Siliconharzen und fluorhaltigen Harzen umfaßt.

5. Elastische Form zur Verwendung zur Herstellung von Lippenstiften mit einem Öffnungsteil und aus übereinandergeschichteten äußeren und inneren Elastomeren, wobei das Elastomere der äußeren Schicht ein Verstärkungsmaterial enthält, und das Elastomere der inneren Schicht kein Verstärkungsmaterial enthält.

6. Elastische Form zur Herstellung von Lippenstiften nach Anspruch 5, wobei das Elastomere, das die innere Schicht bildet, ein ölbeständiges Elastomeres ist.

7. Elastische Form zur Herstellung von Lippenstiften nach Anspruch 6, wobei das ölbeständige Elastomere ein Elastomeres, ausgewählt aus der Gruppe, bestehend aus Acrylkautschuk, Urethankautschuk und fluorhaltigem Kautschuk ist.

8. Verfahren zur Herstellung von Lippenstiften nach Anspruch 5, wobei das Elastomere, das die innerste Schicht bildet, ein ölabweisendes Mittel, ausgewählt aus der Gruppe, bestehend aus Siliconharzen und fluorhaltigen Harzen umfaßt.

## Revendications

1. Procédé pour la fabrication de rouges à lèvres comprenant la fourniture d'un moule élastique présentant un orifice d'ouverture et dont la couche la plus intérieure est faite d'un élastomère ne contenant pas de matière de renforcement, le chargement d'une matière de moulage pour rouges a lèvres dans ce moule élastique à travers cet orifice d'ouverture, le refroidissement de cette matière de moulage pour rouges à lèvres afin de la solidifier, et le démoulage des rouges à lèvres solidifiés.

2. Procédé pour la fabrication de rouges à lèvres suivant la revendication 1, dans lequel cet élastomère formant cette couche la plus intérieure est un élastomère résistant à l'huile.

3. Procédé pour la fabrication de rouges à lèvres suivant la revendication 2, dans lequel cet élastomère résistant à l'huile est un élastomère choisi dans le groupe consistant en caoutchouc acrylique, caoutchouc uréthane et caoutchouc contenant du fluor.

4. Procédé pour la fabrication de rouges à lèvres suivant la revendication 1, dans lequel cet élastomère formant cette couche la plus intérieure comprend un agent oléofuge choisi dans le groupe consistant en résines silicones et résines contenant du fluor.

5. Moule élastique utilisé pour la fabrication de rouges à lèvres ayant un orifice d'entrée et constitué d'élastomères en couches extérieure et intérieure, dans lequel l'élastomère de la couche extérieure contient une matière de renforcement et l'élastomère de la couche intérieure ne contient pas de matière de renforcement.

6. Moule élastique pour la fabrication de rouges à lèvres suivant la revendication 5, dans lequel cet élastomère formant cette couche intérieure est un élastomère résistant à l'huile.

7. Moule élastique pour la fabrication de rouges à lèvres suivant la revendication 6, dans lequel cet élastomère résistant à l'huile est un élastomère choisi dans le groupe consistant en caoutchouc acrylique, caoutchouc uréthane et caoutchouc contenant du fluor.

8. Moule élastique pour la fabrication de rouges à lèvres suivant la revendication 5, dans lequel cet élastomère formant cette couche la plus intérieure comprend un agent oléofuge choisi dans le groupe consistant en résines silicones et résines contenant du fluor.
